# EUROPÄISCHE PATENTANMELDUNG

(11) **EP 1 183 950 A1**
(43) Veröffentlichungstag der Anmeldung: **06.03.2002**
(21) Anmeldenummer: 01115151.1
(22) Anmeldetag: 22.06.2001
(51) Int. Cl.: A21C 11/12, A21C 11/02

(54) **Stanzvorrichtung zum Formen von Teiglingen**

(30) Priorität: 30.08.2000 DE 20014945 U
(71) Anmelder: Werner & Pfleiderer Lebensmitteltechnik GmbH, 91550 Dinkelsbühl (DE)
(72) Erfinder: Fiedler, Rudolf, 81731 Langfurth (DE)
(74) Vertreter: Rau, Manfred, Dr. Dipl.-Ing.

(57) **Zusammenfassung**

Bei einer Stanzvorrichtung zum Formen von Teiglingen ist zum Erreichen einer neuartigen Formgebung für Teiglinge und damit für das fertige Gebäck ein Stanzwerkzeug (16) vorgesehen, das in einem Stanzbereich mit einem im Querschnitt spiralförmig ausgebildeten Stanz-Steg (27) versehen ist, der eine unter Stanz-Kante (29) aufweist, die von innen nach außen zurückgesetzt ist. Es ist weiterhin ein Becher (7) als Gegenwerkzeug vorgesehen, der eine zur Mitte hin abfallende Auflagefläche (14) für einen Teigling (1) aufweist. Das Stanzwerkzeug (16) und der Becher (7) sind relativ zueinander im wesentlichen vertikal aufeinander zu und voneinander weg bewegbar.

## Beschreibung

Die Erfindung betrifft eine Stanzvorrichtung zum Formen von Teiglingen.

Das Formen von Teiglingen, und zwar auch das maschinelle Formen von Teiglingen, hat eine lange Tradition im Bäckereihandwerk.

Der Erfindung liegt die Aufgabe zugrunde, eine Stanzvorrichtung so auszugestalten, daß eine neuartige Formgebung für Teiglinge und damit für das fertige Gebäck erreicht wird.

Diese Aufgabe wird erfindungsgemäß durch die Merkmale im Kennzeichnungsteil des Anspruches 1 gelöst. Der Kern der Erfindung liegt darin, daß durch die besondere Ausgestaltung des Stanzsteges im Zusammenwirken mit dem den Teigling aufnehmenden Becher als Gegenwerkzeug ein mit spiral- oder schneckenförmig verlaufenden Einschnitten versehener Teigling geschaffen wird, der nach dem Ausbacken zu einem schneckenförmigen Gebäck führt.

Derartiges schneckenförmiges Gebäck wurde bisher nur durch Einrollen von Teigbahnen geschaffen, aus denen dann scheibenförmige Teiglinge geschnitten wurden, die zu im wesentlichen ebenen Schnecken ausgebacken wurden. Mit der erfindungsgemäßen Stanzvorrichtung und insbesondere dem erfindungsgemäß ausgestalteten Stanzwerkzeug wird im Zusammenwirken mit dem Gegenwerkzeug ein schneckenförmiges Gebäck erhalten, dessen Oberseite nicht nur spiralförmig ausgestaltet ist, sondern auch von innen nach außen abfällt.

Weitere vorteilhafte Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Stanzvorrichtung nach der Erfindung, eingebettet in den Gesamt-Produktionsprozeß,
- Fig. 2: ein Stanzwerkzeug über einem mit einem Teigling gefüllten Becher vor Durchführung des Stanzvorganges,
- Fig. 3: das Stanzwerkzeug während des Stanzvorganges,
- Fig. 4: das Stanzwerkzeug nach dem Stanzvorgang und
- Fig. 5: eine Abstreifplatte der Stanzvorrichtung in Draufsicht.

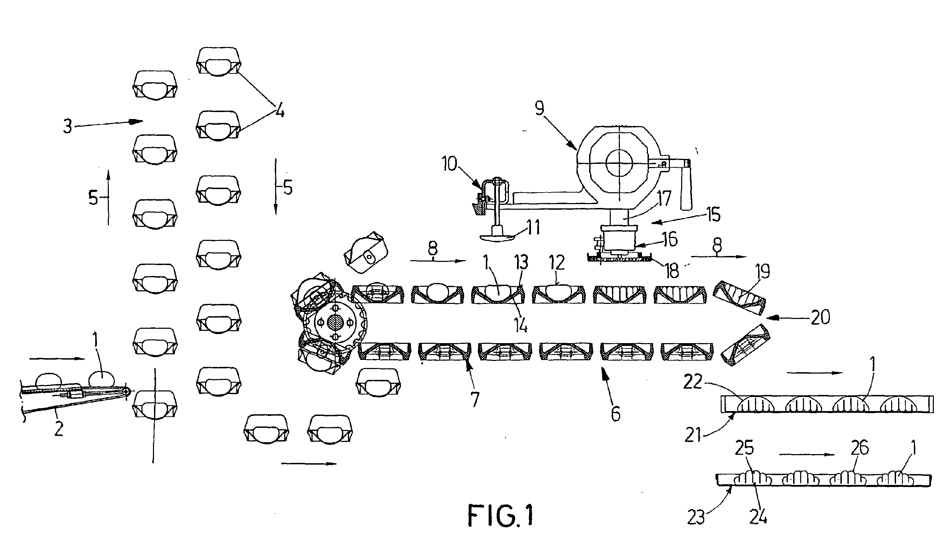

Aus der Zusammenstellungszeichnung gemäß Fig. 1 ergibt sich ein rundgewirkter Teigling 1 aus einem nicht dargestellten Teigteiler und Rundwirker, wie er beispielsweise aus der DE 195 00 851 A bekannt ist, der mittels eines Förderbandes 2 einem Vorgär-Schrank 3 zugeführt wird. In dem Vorgär-Schrank 3 sind Gehänge 4 angeordnet, in die die Teiglinge 1 abgelegt werden. Diese Gehänge 4 werden endlos in Förderrichtung 5 transportiert. Nach Beendigung der Vorgare werden die vorgegarten Teiglinge 1 in ein Becherwerk 6 mit Bechern 7 übergeben, in denen jeweils ein Teigling 1 abgelegt wird. Zumindest der obere Teil des Becherwerkes 6 wird horizontal geführt. Wie der Zeichnung entnehmbar ist, werden die Teiglinge 1 bei der Übergabe aus dem Gehänge 4 in einen Becher 7 gewendet. Sie werden in Transportrichtung 8 taktweise einer Stanzvorrichtung 9 zugeführt. Dort wird zuerst in einer Andrückstation 10 mittels eines Andrückstempels 11 der Teigling 1 derart in den als Gegenwerkzeug dienenden Becher 7 gedrückt, daß er eine flache Oberseite 12 bekommt, die etwa mit dem Rand 13 des Bechers 7 fluchtet. Der Teigling 1 wird hierbei etwas in die Breite gedrückt und teilweise an die flach-kegelstumpfförmige Auflagefläche 14 des Bechers 7 angedrückt. Von einem in Transportrichtung 8 nachgeordneten Stanzgerät 15 wird der bereits etwas flachgedrückte Teigling 1 mittels eines spiralförmigen Stanzwerkzeuges 16 gestanzt. Das Stanzwerkzeug 16 ist an einem Stanzstempel 17 angebracht, der auch mit einer Abstreifplatte 18 versehen ist, die auf den Teigling 1 aufgesetzt wird. Der Stanzstempel 17 wird durch die Abstreifplatte 18 hindurch in den Teigling 1 gedrückt und wieder aus diesem herausgezogen, wobei die Abstreifplatte 18 verhindert, daß der Teigling 1 aus dem eine Halb-Form bildenden Becher 7 herausgezogen wird. Durch das Stanzen erhält der Teigling 1 spiralförmig verlaufende Einschnitte 19.

Nach dem Stanzen werden die Becher 7 an einer Umlenkstelle 20 des Becherwerkes 6 entleert, wobei die gestanzten Teiglinge 1 wiederum gewendet und auf eine Gärdiele 21 abgelegt werden. Hierbei kommt ihre im wesentlichen flache Oberseite 12, von der die Einschnitte 19 ausgehen, zur Auflage auf der Gärdiele 21, die im wesentlichen durch die Auflagefläche 14 des Bechers 7 geformt ist. Die im wesentlichen gewölbte nicht von den Einschnitten durchsetzte Seite 22 kommt nach oben.

Nach der Vorgar werden die Teiglinge 1 unter erneutem Wenden auf ein Backblech 23 abgelegt. Die während des Garens auf der Gärdiele 21 gewölbte Seite 22 liegt auf dem Backblech 23 auf und wird dadurch zur flachen Unterseite 24. Die Oberseite 25 erhält jetzt eine Struktur, bei der ein spiralförmig von innen nach außen verlaufender Teig-Steg 26 von der Mitte zum Rand des Teiglings 1 hin abfällt. Zwischen benachbarten Einschnitten 19 ist der Steg 26 nach oben gewölbt, d.h. der Teigling 1 ist zu den Einschnitten 19 hin eingedrückt. In dieser Form wird der Teigling 1 gebacken. Das Gebäck hat anschließend im wesentlichen die Form, die es vor dem Einschieben des Backbleches 23 in den Ofen hat, wobei selbstverständlich das Gebäck beim Backen noch geht und hierbei der schneckenförmige bzw. spiralförmige Steg 26 etwas verläuft.

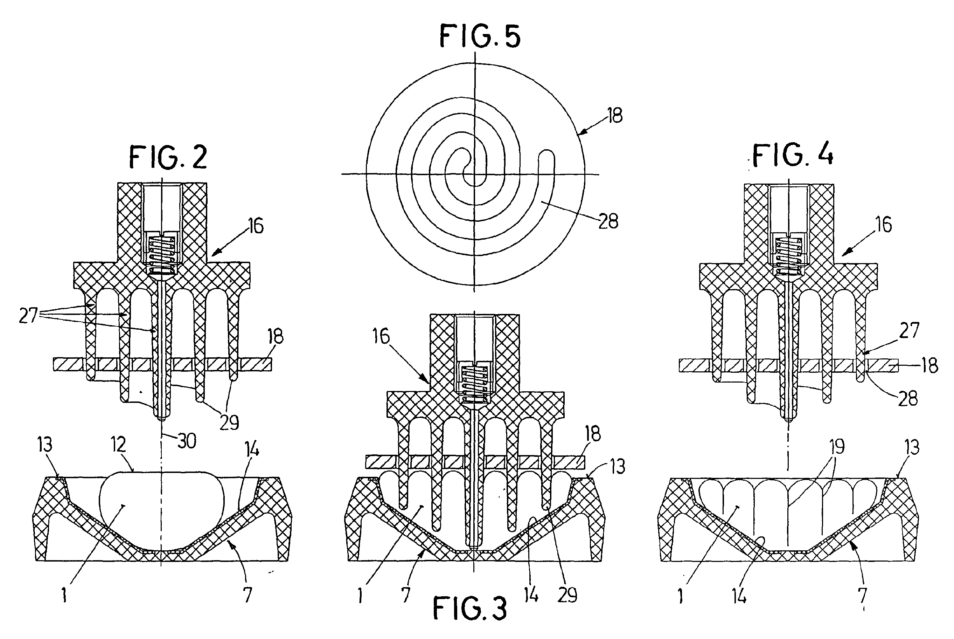

Wie aus den Fig. 2 bis 5 hervorgeht, weist das Stanzwerkzeug 16 einen spiralförmig gewendelten Stanz-Steg 27 auf, dessen Querschnittsverlauf sich auch aus dem Verlauf eines Ausschnitts 28 in der in Fig. 5 dargestellten Abstreifplatte 18 ergibt. Der Stanz-Steg 27 ist diesem Ausschnitt 28 angepaßt. Die untere Stanz-Kante 29 des Stanz-Steges 27 verläuft von der Mittel-Achse 30 des Stanzwerkzeuges 16 nach außen zurückversetzt, d.h. im Bereich der Mittel-Achse 30 ragt der Stanz-Steg 27 am weitesten nach unten.

Wie sich aus Fig. 3 ergibt, ist der Verlauf der Stanz-Kante 29 etwa dem Verlauf der Auflagefläche 14 jedes Bechers 7 angepaßt, d.h. eine Einhüllende der Stanz-Kante 29 verläuft im wesentlichen parallel zur Auflagefläche 14.

Die Abstreifplatte 18 ist der Stanzstation 15 zugeordnet und wird ebenfalls vom Stanzstempel 17 mit auf den Becher 7 zubewegt. Beim eigentlichen Stanzvorgang, wie er in Fig. 3 dargestellt ist, wird dann allerdings die Abstreifplatte 18 auf oder kurz oberhalb des Randes 13 des Bechers 7 festgehalten und lediglich der Stanz-Steg 27 in den Teigling 1 eingedrückt. Beim Zurückziehen des Stanzwerkzeuges 16 bleibt die Abstreifplatte 18 zumindest über den wesentlichen Teil des Auszieh-Vorganges auf dem Teigling 1, so daß dieser im Becher 7 verbleibt. Fig. 4 zeigt dann eine Position des Stanzwerkzeuges 16 relativ zum Becher 7, die der Position nach Fig. 2 entspricht, wobei allerdings der Teigling 1 jetzt bereits mit den Einschnitten 19 versehen ist.

## Patentansprüche

1. Stanzvorrichtung zum Formen von Teiglingen (1),
**dadurch gekennzeichnet,**
**daß** ein Stanzwerkzeug (16) vorgesehen ist, das in einem Stanzbereich mit einem im Querschnitt spiralförmig ausgebildeten Stanz-Steg (27) versehen ist, der eine untere Stanz-Kante (29) aufweist, die von innen nach außen zurückgesetzt ist,
**daß** ein Becher (7) als Gegenwerkzeug vorgesehen ist, der eine zur Mitte hin abfallende Auflagefläche (14) für einen Teigling (1) aufweist und
**daß** das Stanzwerkzeug (16) und der Becher (7) relativ zueinander im wesentlichen vertikal aufeinander zu und voneinander weg bewegbar sind.

2. Stanzvorrichtung nach Anspruch 1, **dadurch gekennzeichnet,**
**daß** mehrere taktweise im wesentlichen horizontal unter dem Stanzwerkzeug (16) hindurch bewegbare Becher (7) vorgesehen sind.

3. Stanzvorrichtung nach Anspruch 2, **dadurch gekennzeichnet,**
**daß** die Becher (7) an einem Becherwerk (6) angeordnet sind.

4. Stanzvorrichtung nach einem der Ansprüche 1 bis 3, **dadurch gekennzeichnet,**
**daß** das Stanzwerkzeug (16) an einem auf und ab bewegbaren Stanzstempel (17) angebracht ist.

5. Stanzvorrichtung nach einem der Ansprüche 1 bis 4, **dadurch gekennzeichnet,**
**daß** eine Abstreifplatte (18) mit einem Ausschnitt (28) vorgesehen ist, der von dem Stanz-Steg (27) durchsetzt und diesem angepaßt ist.

6. Stanzvorrichtung nach einem der Ansprüche 1 bis 5, **dadurch gekennzeichnet,**
**daß** die Stanz-Kante (29) etwa parallel zur Auflagefläche (14) des Bechers (7) verläuft.
